# EUROPEAN PATENT APPLICATION

(11) **EP 1 406 031 A2**
(43) Date of publication of application: **07.04.2004**
(21) Application number: 03256250.6
(22) Date of filing: 03.10.2003
(51) Int. Cl.: F16H 57/04

(54) **Improvements in or relating to gearboxes**

(30) Priority: 05.10.2002 GB 0223175
(71) Applicant: EATON CORPORATION, Cleveland, Ohio 44114-2584 (US)
(72) Inventor: Coxon, David John, c/o Eaton Ltd., Worsley, Manchester M28 5GL (GB); Irving, Martin, Rossendale, Lancashire, BB4 9TE (GB)
(74) Representative: Harrison Goddard Foote

(57) **Abstract**

A gearbox having an oil pump driving arrangement therein is described, the arrangement comprising: oil pump means (88) adapted for pumping oil by rotation of at least a part (114) of said oil pump about an axis; said part being operably connected for rotation to reverse idler gear means (30) whereby rotation of said idler gear means causes said oil pump means to pump oil.

## Description

The present invention relates generally to gearboxes for vehicles particularly, though not exclusively, to gearboxes for heavy vehicles such as trucks, for example.

Gearboxes for heavy vehicles such as road haulage trucks, for example, tend to be physically large and because of the application, highly stressed. Such gearboxes have many moving parts which require adequate lubrication of the gears per se and of the bearings on which the gears and support shafts, for example, rotate. Gearboxes having as many as sixteen speeds are common. Generally, the more gears in the gearbox, the larger it is physically. Some gearboxes are able to operate efficiently with the lubrication of the moving parts effected by so-called splash lubrication where oil in the gearbox casing is distributed all around internally by being thrown by the rotating gears thus providing a sufficient supply of oil to moving surfaces. However, there are gearboxes where splash lubrication does not provide an adequate oil supply to all parts. Some gearboxes may require, for example, pressure feed lubrication to a rear output shaft bearing, for example.

In order to provide a pressure feed of oil to parts that require it some gearboxes have an oil pump incorporated therein within the gearbox casing itself. Generally, such prior art gearbox oil pumps have been driven off of the layshaft by a dedicated engaging spur gear provided on the layshaft, i.e. a gear in addition to the usual layshaft gears which mate with the respective forward or reverse gears on the main shaft in the gearbox. The dedicated spur gear has engaged with a toothed annulus of a gerotor type oil pump, for example, causing the annulus to rotate about a central, fixed rotor member and thereby pump oil. In this type of construction it is necessary to provide a dedicated gear on the layshaft, an oil pump annulus having gear teeth and a separate shaft on which the oil pump may be supported and a supporting structure in the gearbox casing. All of these requirements are costly and, as importantly, lead to an increase in the size and weight of the gearbox.

It is an object of the present invention to provide an oil pump in a gearbox which is simpler, less costly, lighter and less space consuming than prior art arrangements.

According to a first aspect of the present invention there is provided a gearbox having an oil pump driving arrangement therein, the arrangement comprising: oil pump means adapted for pumping oil by rotation of at least a part of said oil pump about an axis; said part being operably connected for rotation to reverse idler gear means whereby rotation of said idler gear means causes said oil pump means to pump oil.

According to a second aspect of the present invention there is provided a method of incorporating an oil pump into a gearbox, the method comprising the steps of: providing oil pump means which comprise at least two relatively moving parts which are adapted to co-operate to pump oil; operably connecting reverse idler gear means to at least one of said at least two moving parts so as to cause relative movement therebetween and thereby to effect pumping of oil.

Generally, all gearboxes have a reverse idler gear, the purpose of which, when reverse gear is engaged, is to reverse the direction of rotation of the gearbox output shaft so as to enable the vehicle to move in a reverse direction.

The reverse idler gear is virtually universally driven by the gearbox layshaft which is rotating at all times when the engine of the vehicle is running even though the vehicle gearbox may be in neutral and the vehicle stationary. Thus, the reverse idler gear, which is in constant driven engagement with the layshaft, is also rotating at all times and driving the oil pump means. Thus when the engine is running, the oil pump provides a supply of oil under pressure to those parts of the gearbox to which it is in fluid supply connection.

Since all gearboxes are provided with a reverse idler gear which is also provided with its own dedicated idler gear shaft on or about which it rotates and a layshaft gear from which it is driven, an oil pump driving arrangement according to the present invention requires significantly less space in a gearbox casing which consequently may be made smaller and lighter. Furthermore, an extra drive gear on the layshaft may be dispensed with as may several parts which were -needed in prior art arrangements thus further reducing cost and weight.

The pressure of oil delivery generally does not need to be very high. The major requirements are that oil is constantly and reliably supplied to remote parts of the gearbox such as bearings, for example, and that if an oil cooler is fitted, then sufficient oil pressure is available to circulate the oil around the oil cooling system.

In this specification the term "constant oil supply" does not means a constant flow in terms of volume/unit time but merely that there is a flow of oil substantially at all times when the layshaft is rotating. Thus, the rate of oil delivery may vary.

The oil pump type is not of great importance per se and different types of pump may be adapted for use in the arrangement of the present invention. The major requirement is that the pump will pump oil by rotation of at least a component part of the pump by being driven about an axis by the rotating reverse idler gear.

Suitable types of pump may include gerotor type pumps, gear pumps and crescent type pumps, for example.

In some pumps the axis of rotation of the moving member or component part may be about an axis which is eccentric to other co-operating functional parts of the pump. In the present invention, however, the axis of rotation may be that of the reverse idler gear support shaft and, where appropriate, the relevant functional parts of the pump may be adapted so as to rotate eccentrically about the idler gear axis.

In a preferred embodiment of the present invention, the oil pump means may be incorporated into the body of the reverse idler gear per se. Consequently, in addition to a functional part of the oil pump rotating about the axis of the reverse idler gear means, the oil pump means may also lie mainly or substantially within the axially directed space defined by end faces of the reverse idler gear means. Thus, an oil pump may be incorporated into a gearbox with virtually no increase in the space required therein.

In one embodiment of the present invention a gerotor type oil pump has been used. Gerotor type oil pumps comprise an outer annulus having a lobed void inside and a rotor member having a lobed shape which co-operates with the void of the annulus by relative rotation therewith so as suck oil in at one position and expel the oil under pressure at another position. All that is required is that the annulus and rotor rotate relative to each other and that appropriate porting is provided to define oil entry and exit positions. Thus, in the embodiment of the present invention the annulus is incorporated in an eccentric manner in the reverse idler gear and consequently rotates and the rotor member is incorporated into the idler gear support shaft which is essentially stationary as is the rotor and about which the idler gear rotates whilst supported on bearings such as rolling element type bearings, for example. In this embodiment, whilst the central pump element is termed a "rotor" it is nevertheless stationary and it is effectively the pump body or annulus which rotates about the rotor.

A component part or parts of most pumps which are suitable for use in the present invention are so-called port plates which have ports which govern oil input to the pump and oil output from the pump. In the present invention oil supply to the pump may be from one radial face of the pump whilst oil output may be from the opposite radial face of the pump. Alternatively, both oil input and output may be effected from one radial face of the pump by suitably adapted port plates.

Oil input and output may be effected through the stationary idler gear support shaft.

Oil supply circuits may be provided by any suitable means such as oil galleries in the gearbox casing or separate oil pipes, for example.

According to a third aspect of the present invention, there is provided a power plant comprising an engine and a gearbox embodying the first and/or second aspects according to the present invention.

According to a fourth aspect of the present invention there is provided a motor vehicle embodying the first and/or second and/or third aspects of the present invention.

In order that the present invention may be more fully understood, an example will now be described by way of illustration only with reference to the accompanying drawings, of which:
Figure 1 shows a schematic view of a gear train including a reverse idler gear in a gearbox;
Figure 2 shows a perspective view-of -part of a gearbox casing including a reverse idler gear in which an oil pump arrangement according to the present invention is embodied;
Figure 3 shows a perspective view of a reverse idler gear and support shaft embodying an oil pump arrangement according to the present invention;
Figure 4 shows an exploded view of the component parts of the embodiment shown in Figure 3;
Figure 5 shows an end view in the axial direction of the embodiment of Figure 3 in the direction of the arrow 5;
Figure 6 shows a cross section through the plane 6-6 of Figure 5;
Figure 7 shows a cross section through the plane 7-7 of Figure 5; and
Figure 8 which shows a view in elevation of the rotor and annulus of a gerotor type oil pump.

Referring now to the drawings and where the same features are denoted by common reference numerals.

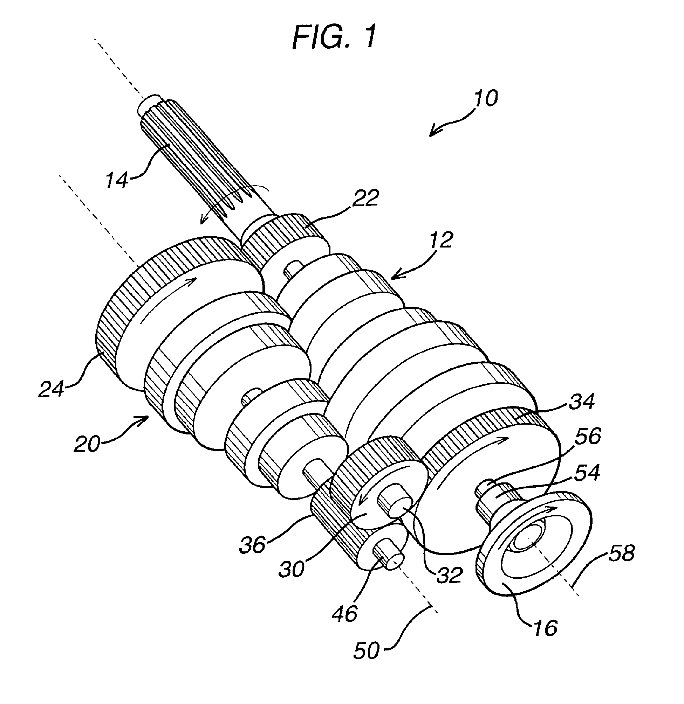

Figure 1 shows a schematic perspective view of a gear train 10. The gear train 10 includes a set of gears 12 axially aligned with an input shaft 14 driven by an engine (not shown) and an output flange 16 which transfers drive from the engine to a differential (not shown), for example, and then to drive wheels (not shown) on a vehicle (not shown). The gear train 10 further includes a layshaft 20 having a plurality of gears thereon which, when the engine is running, rotates all the time (the term "layshaft" is known in the art as that shaft and its associated gears as a unit; in United States parlance the same part is referred to as the "countershaft"). The layshaft is driven by a gear 22 permanently connected to the input shaft 14 and which is in constant driving engagement with a gear 24 on the layshaft 20, the gears 22, 24 being termed the "headset gears". The gear train 10 includes a reverse idler gear 30 which rotates on or with its own support shaft 32. And serves to change the direction of rotation of the output flange 16 via the reverse gear 34 when the vehicle is to move in reverse. The layshaft 20 has a gear 36 which is in permanent driving engagement with the reverse idler gear 30. The various gears are in driving engagement with each other via gear teeth as is well known in the art. The gear train 10 is enclosed in a casing (not shown in Fig. 1) according to normal practice and contains a supply of oil. The oil lies in a sump in the gearbox casing and is distributed around the gearbox by both splash lubrication as described hereinabove and by the oil pump arrangement according to the present invention. Gears are selected via a gearshift lever (not shown) and gear selectors (not shown) in the gearbox by the vehicle driver as required and the gear train 10 as shown operates in the manner of known gearboxes and will not be described further.

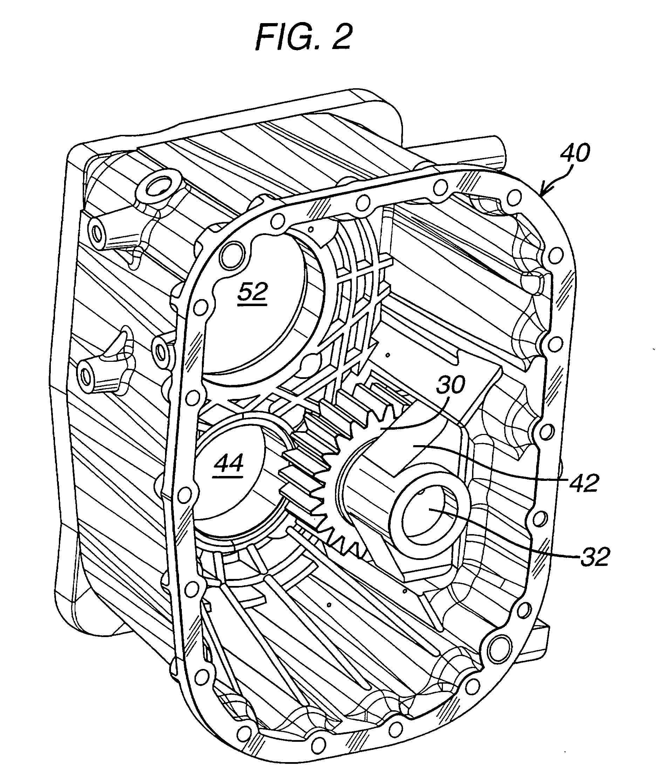

Figure 2 shows a part of a gearbox casing 40 which houses the reverse idler gear 30 and its support shaft 32 in a pair of webs 42. 44 denotes an aperture which receives a bearing (not shown) which rotatably supports one end 46 of the layshaft 20 about its axis 50. Aperture 52 houses a bearing (not shown) which rotatably supports the output end 54 of the mainshaft 56, on which the gears 12 are mounted, about its axis 58.

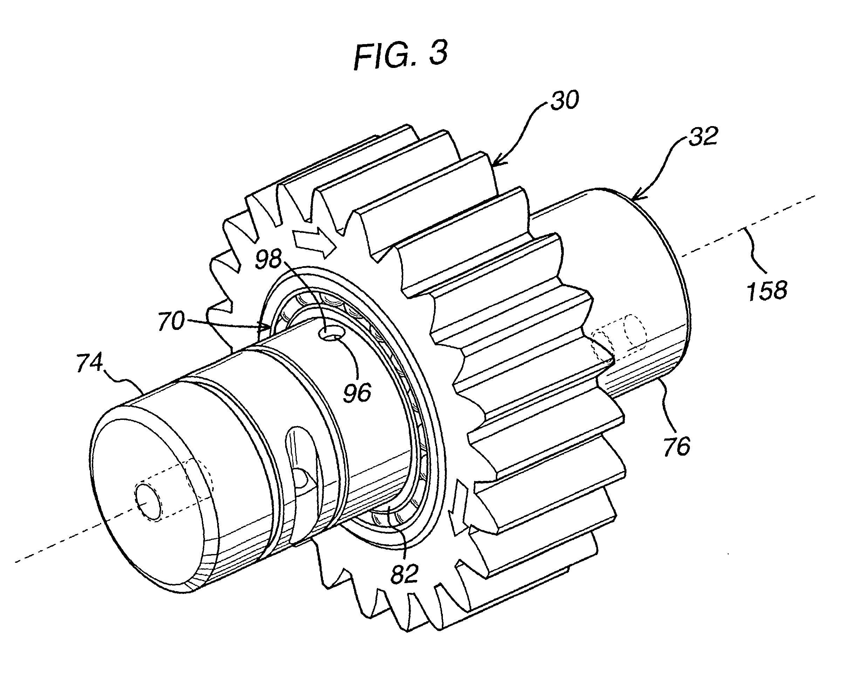

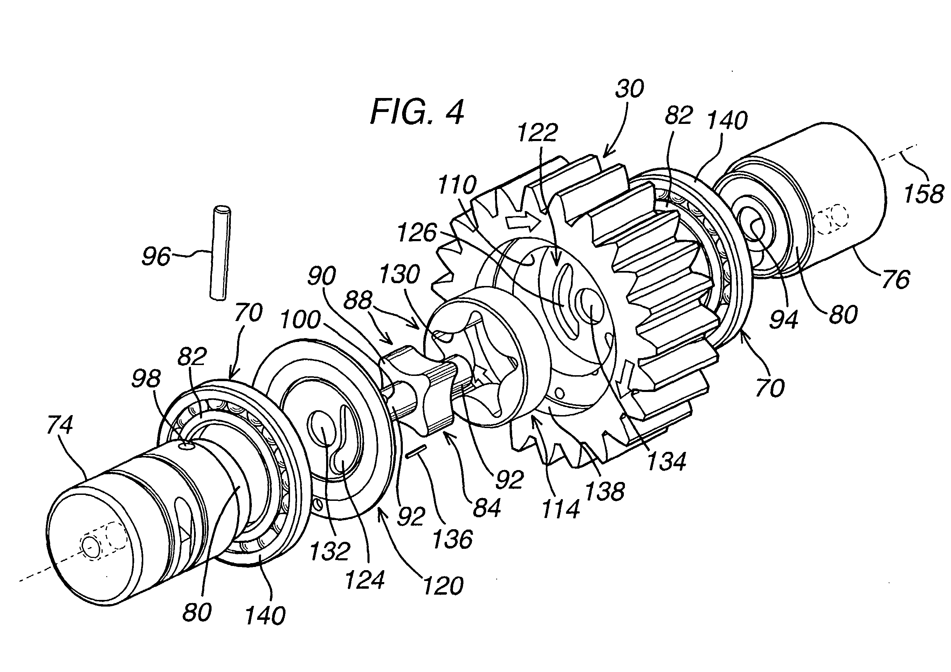

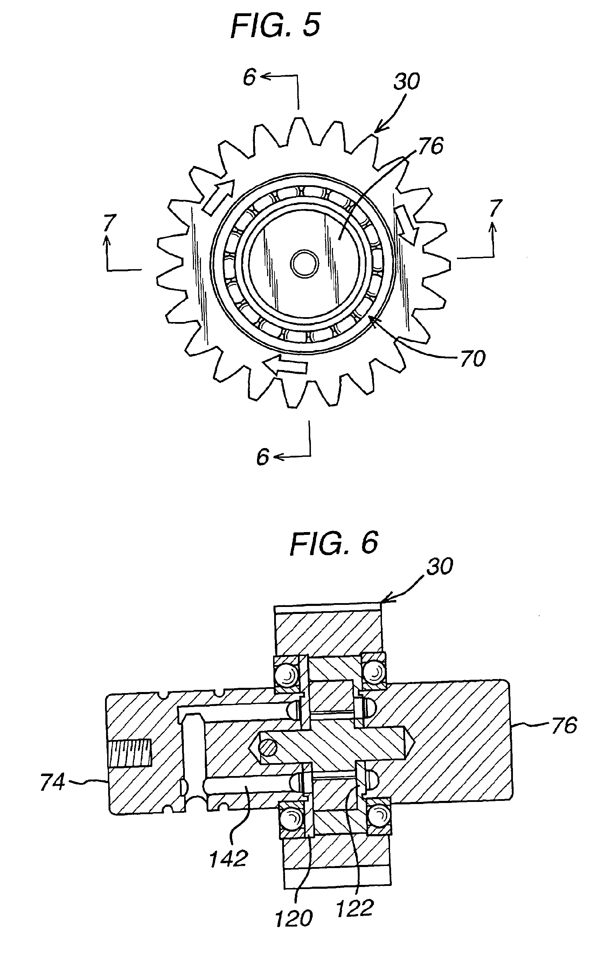

Figures 3 to 7 show various views of the reverse idler gear 30, its support shaft 32 and an oil pump arrangement according to the present invention.

In the embodiment, the reverse idler gear 30 rotates about the shaft 32 on bearings 70, in this case rolling element bearings such as ball-races, for example, the shaft 32 being fixed and unable to rotate in the webs 42 due to mechanical locking devices such as pins, keys, bolts or the like (not shown) engaging with the shaft or by an interference fit with the webs 42. The shaft 32 comprises two shaft portions 74, 76 having reduced diameter portions 80 to receive the inner races 82 of the bearings 70. The two shaft portions 74, 76 are connected by the rotor member 84 of a gerotor type oil pump, designated generally at 88. The rotor member 84 comprises a stationary rotor element 90 and two stub shafts 92 which are received in bores 94 in the inner ends of the shaft portions 74, 76. The rotor member 84 is keyed to the shafts 74, 76 by pins 96 received in aligned holes 98, 100 in the shafts 74, 76 and rotor member shafts 92, respectively and which prevent the rotor member from rotating and maintains it in a fixed relationship with the shaft 32. The reverse idler gear 30 has a bore 110 to receive the annular member 114 of the gerotor oil pump and which annulus has an interference fit in the bore 110 so that it rotates with the gear 30 and cannot rotate relative to the gear bore 110. The gear 30 is also provided with port plates 120, 122 with ports 124, 126, respectively and which ports are positioned to co-operate with the suction: oil input, and pressure: oil output, sectors of the pump during relative rotation of the rotor element and annulus void 130. The port plates 120, 122 each have holes 132, 134 through which the stub shafts 92 of the rotor member pass. The port plates 120, 122 are keyed in place to the annulus 114 by dowels 136 so as to prevent relative rotation therebetween. The gear 30 is also provided with bores 138 to receive the outer races 140 of the bearings 70. Oil is supplied to the suction side port plate 120 by conduit drillings 142 in shaft member 74 and oil is expelled under pressure from port plate 122 into an oil supply circuit (not shown) by conduit drillings 144 in shaft member 76.

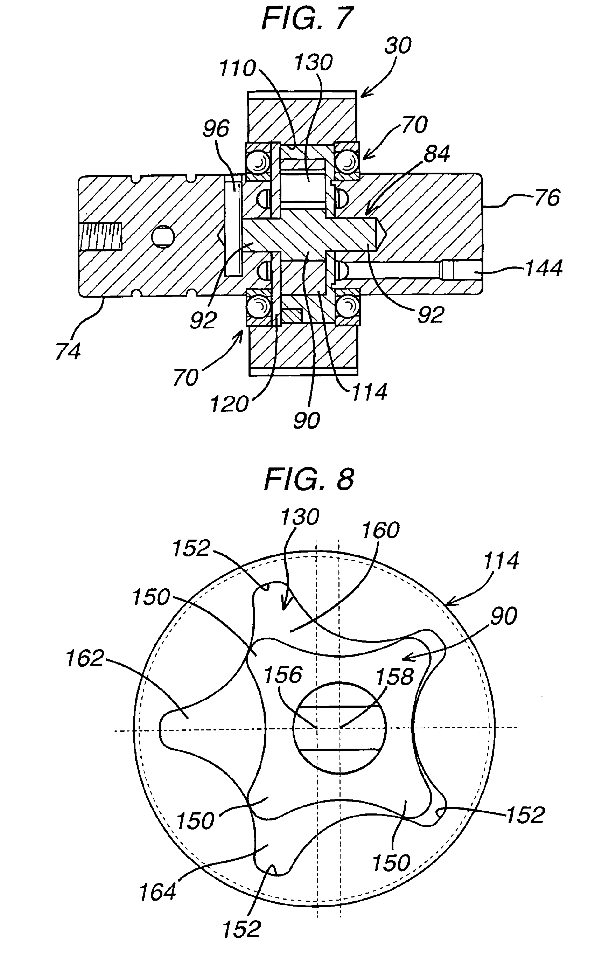

In operation relative rotation of the annulus 114 and rotor element 90 causes the lobes 150 of the rotor element 90 and co-operating void lobes 152 of the annulus to mesh so as to pump oil. As may be seen more clearly in Figure 8, the axes of rotation of the annulus 156 and that of the rotor 158 are mutually offset. The axis 158 of the rotor member 84 is also the common axis of the shaft 32 and the gear 30 about which the gear 30 rotates. In Figure 8 the volume indicated by 160 is the suction, oil input part of the oil pumping cycle; the volume denoted by 162 is the oil transfer phase; and, the volume denoted by 164 is the pressure, oil output part of the phase. However, the operation of the gerotor type oil pump in the present invention is the same as any gerotor oil pump and will be understood by any person normally skilled in the oil pump art and will not be described further.

Although the present invention has been described with the rotor element 90 being formed on a rotor member 84 and being assembled with two shaft members 74, 76, this may not necessarily be the case as the rotor element 90 may be formed integrally with one or other of the shaft members 74, 76. Similarly, the annulus has been described as a separate member fitted to the gear wheel 30, however, the annulus may be formed integrally in the body of the gear 30 during manufacture thereof thus reducing complexity and the number of parts involved.

The embodiment shown has the oil route passing through the shaft 32 from one side to the other via the pump 88 though port plates 120, 122 having ports 124, 126 which lie on either side face of the annulus 114. However, the oil supply route comprising input and output may be formed on one radial face only of the annulus by means of suitably positioned ports and oil conduits, if desired.

Although described with reference to a gerotor type oil pump, the present invention may embody any suitable type oil pump such as other gear type pumps or a crescent type pump, for example.

## Claims

1. A gearbox having an oil pump driving arrangement therein, the arrangement comprising: oil pump means (88) adapted for pumping oil by rotation of at least a part (114) of said oil pump about an axis (158) ; said part being operably connected for rotation to reverse idler gear means (30) whereby rotation of said idler gear means (30) causes said oil pump means (88) to pump oil.

2. An arrangement according to claim 1 wherein said axis is the axis of rotation of said reverse idler gear means.

3. An arrangement according to either claim 1 or claim 2 wherein part (114) of said oil pump means (88) is incorporated into said reverse idler gear means (30).

4. An arrangement according to any one preceding claim wherein operative, relatively moving parts (84, 114) of said oil pump means lie axially within radial planes defined by axial end faces of said reverse idler gear means.

5. An arrangement according to any one preceding claim wherein a shaft (32) on which said reverse idler gear means is mounted is stationary and said reverse idler gear is rotatable about said shaft.

6. An arrangement according to claim 5 wherein a first operable part (84) of said oil pump means is incorporated into said shaft means and is stationary therewith.

7. An arrangement according to claim 6 wherein a second operable part (114) of said oil pump means is incorporated into said reverse idler gear means and is rotatable about said first operable part (84).

8. An arrangement according to any one preceding claim wherein said oil pump means is a gerotor type oil pump comprising a rotor element (84) and an annulus member (114).

9. An arrangement according to claim 8 wherein the annulus member (114) rotates eccentrically (156) with respect to the axis of rotation (158) of said reverse idler gear means.

10. An arrangement according to either claim 8 or claim 9 wherein said annulus member is fitted to said reverse idler gear means.

11. An arrangement according to either claim 8 or claim 9 wherein said annulus is formed integrally with said reverse idler gear means.

12. An arrangement according to any one preceding claim wherein an oil path (142, 144) is effected through the idler gear support shaft.

13. An arrangement according to any one of preceding claims 1 to 7 wherein said oil pump means is selected from the group comprising gear pumps and crescent type pumps.

14. A method of incorporating an oil pump into a gearbox, the method comprising the steps of: providing oil pump means (88) which comprise at least two relatively moving parts (84, 114) which are adapted to co-operate to pump oil; operably connecting reverse idler gear means (30) to at least one (114) of said at least two moving parts so as to cause relative movement therebetween and thereby to effect pumping of oil.

15. A power plant comprising an engine and a gearbox, the gearbox embodying the oil pump driving arrangement of any one of preceding claims 1 to 13.

16. A motor vehicle embodying a gearbox or power plant as defined in any one preceding claim from 1 to 13 and 15.
